# FASCICULE DE BREVET EUROPEEN

(11) **EP 2 722 155 B1**
(45) Date de publication et mention de la délivrance du brevet: **18.11.2015**
(21) Numéro de dépôt: 14150255.9
(22) Date de dépôt: 11.03.2011
(51) Int. Cl.: B29C 51/26, B29C 51/42, B29C 51/44, B29C 51/18, B29C 51/34

(54) **Dispositif de fabrication de récipients par thermoformage**
Vorrichtung zur Herstellung von Behältern durch Warmformen
Device for manufacturing containers by thermoforming

(30) Priorité: 17.03.2010 FR 1051900
(43) Date de publication de la demande: 23.04.2014
(62) Demande divisionnaire de: 11712989.0
(73) Titulaire: ERCA, 91940 Les Ulis (FR)
(72) Inventeur: Cooper, Timothy, 94240 L'Hay les Roses (FR); Moreau, Frédéric, 91410 Corbreuse (FR); Schwab, Dominique, 78000 Versailles (FR)
(74) Mandataire: Intès, Didier Gérard André

(56) Documents cités:
- EP-A2- 0 098 420
- WO-A2-2007/088161
- GB-A- 908 544

## Description

La présente invention concerne un dispositif de fabrication de récipients par thermoformage, comprenant un poste de thermoformage qui comprend une pluralité de chambres de thermoformage.

Le document GB 908 544 divulgue un dispositif de ce type.

Dans un tel dispositif, une pluralité de récipients sont formés simultanément dans les chambres de thermoformage, puis démoulés, c'est-à-dire sortis de ces chambres.

Compte tenu des cadences élevées de fabrication, il importe que le démoulage s'opère dans un laps de temps minimum pour les récipients qui viennent d'être simultanément thermoformés. Lorsque les récipients sont dépourvus de zones en contre-dépouille, le démoulage est en général simple à réaliser puisqu'il peut être opéré par un simple déplacement relatif des récipients et des chambres de thermoformage, en translation parallèle à la direction de thermoformage (qui est la direction de déplacement des pistons de thermoformage).

Le démoulage est plus compliqué lorsque les récipients ont des zones en contre-dépouille. Les chambres de thermoformage doivent alors avoir au moins deux parties déplaçables l'une par rapport à l'autre perpendiculairement à la direction de thermoformage.

Par ailleurs, le démoulage des récipients doit être suivi par leur transfert vers un poste de dépose ou de remplissage.

Lorsque les récipients sont thermoformés dans une bande continue, ce transfert est réalisé simplement puisqu'il suffit de faire avancer la bande pour déplacer ensemble tous les récipients qui viennent d'être thermoformés et sont solidaires de la bande.

Toutefois, de plus en plus souvent, les récipients sont thermoformés dans des pastilles individuelles pour limiter les pertes de matière. A l'issue de leur thermoformage simultané, ils sont donc indépendants les uns des autres et doivent donc être manipulés individuellement. Ainsi, le démoulage doit s'accompagner de la préhension individuelle de chaque récipient, en vue de permettre son transfert. Ceci complique le démoulage et risque d'augmenter sa durée.

Le document EP 0 098 420 divulgue un dispositif avec une interface de support associée aux chambres de thermoformage.

Le document WO 2007/088161 divulgue un dispositif de thermoformage dont les chambres sont conformées pour faciliter le démoulage d'objets en contre-dépouille.

L'invention vise à proposer un dispositif de fabrication de récipients par thermoformage qui, même dans les situations précitées, permette un démoulage aisé des récipients, sans perte de temps.

Ce but est atteint grâce au fait que le poste de thermoformage comprend une base de bloc de moule présentant des cavités de thermoformage et une interface de bloc de moule comprenant au moins deux séries de chemises d'interface, l'interface de bloc de moule étant apte à être déplacée de telle sorte que les chemises d'interface d'une série puissent être placées en regard des cavités de thermoformage de la base de bloc de moule manière à former, avec ces cavités, des chambres de thermoformage dans lesquelles des récipients peuvent être thermoformés, tandis que les chemises d'interface de l'autre série sont écartées de la base de bloc de moule pour permettre le dégagement de récipients préalablement thermoformés, portés par ces chemises d'interface.

L'interface du bloc de moule peut fonctionner en temps masqué, une série de chemises d'interface pouvant être utilisée pour le thermoformage, tandis que l'autre série est utilisée pour le dégagement des récipients. Une fois que les récipients portés par les chemises de l'autre série sont dégagés du bloc de moule, ils peuvent être extraits de ces chemises avec toutes les précautions nécessaires (surtout lorsqu'ils ont des zones en contre-dépouille et/ou ont été thermoformés individuellement) pendant que d'autres récipients sont en cours de thermoformage. Par ailleurs, si les récipients sont thermoformés à partir de pastilles individuelles, la mise en place des pastilles dans le poste de thermoformage peut intervenir lors du déplacement de l'interface de thermoformage visant à intervertir les positions des séries de chemises de thermoformage.

Avantageusement, les chemises d'interface peuvent adopter une configuration resserrée pour le thermoformage et une configuration dilatée pour le dégagement des récipients.

Les chemises d'interface en configuration resserrée peuvent ainsi servir non seulement au thermoformage, mais également au transport des récipients qui viennent d'être thermoformés lors du passage de la série correspondante de sa position utile au thermoformage à sa position utile au dégagement des récipients. Dans cette position utile au dégagement, les chemises peuvent être dilatées pour permettre un dégagement aisé des récipients.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue schématique de côté d'un dispositif selon l'invention ;
- les figures 2 à 5 montrent, dans quatre situations successives, la configuration du poste de découpe et illustrent également une partie des moyens de transfert pour amener des pastilles vers le poste de chauffe ;
- la figure 6 illustre l'organisation d'une part, des zones de pastille dans la bande de thermoformage et, d'autre part, des chambres de thermoformage ;
- la figure 7 est une vue en perspective dans la zone du poste de découpe et du poste de thermoformage ;
- la figure 8 est une vue de côté du dispositif selon l'invention, permettant de mieux comprendre la conformation du poste de thermoformage et montrant en particulier que le bloc de moule comprend une base de moule et une interface de thermoformage ; et
- la figure 9 est une vue en perspective de l'interface de thermoformage.

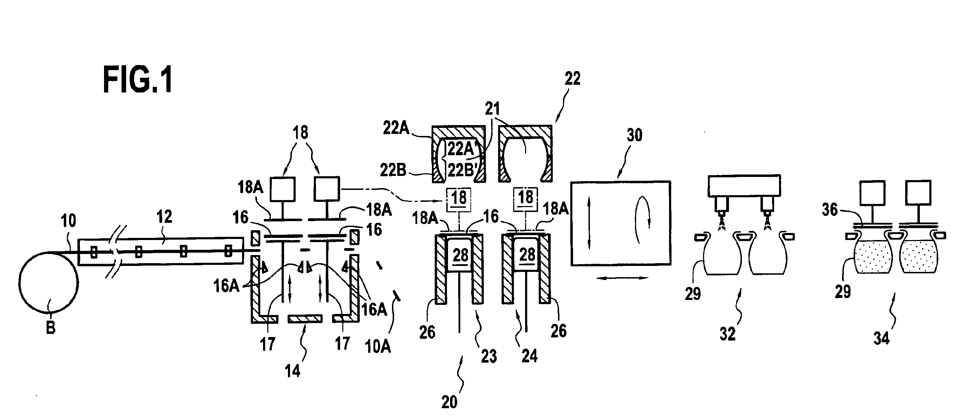

Les différents éléments du dispositif de l'invention sont décrits en référence à la figure 1, de l'amont vers l'aval. Le dispositif comprend une bobine B à partir de laquelle est dévidée une bande de matériau thermoplastique 10, avancée en pas à pas et entraînée par des moyens connus en eux-mêmes. La bande 10 passe dans un poste de chauffe 12, dans lequel au moins des zones de pastilles sont chauffées dans la bande 10. La bande passe ensuite dans un poste de découpe 14 dans lequel des pastilles 16 sont découpées dans ces zones chauffées.

Le dispositif comprend également des moyens de transfert 18 qui permettent d'amener les pastilles chaudes dans un poste de thermoformage 20. Pour découper une pastille, le poste de découpe comprend un ensemble de découpe ayant un outil de découpe qui comprend un couteau annulaire 16 A ou poinçon, et un contre-outil de découpe non représenté sur la figure 1. Il comprend également un noyau de support de pastille 17 qui est situé à l'intérieur du couteau annulaire 16A et qui est apte à porter une pastille découpée.

Comme on le comprend sur la figure 1, le noyau de support de pastille 17 est déplaçable en va-et-vient perpendiculairement à la bande 10, pour porter des pastilles 16 au-delà de l'arête de découpe du couteau 16A. Les moyens de transfert 18 comprennent, pour saisir chaque pastille, un organe de préhension 18A qui est apte à saisir la pastille découpée 16 dans le poste de découpe 14 et à être déplacé pour extraire la pastille du poste de découpe et amener cette pastille dans le poste de thermoformage 20.

On voit que, en aval du poste de découpe 14, il reste de la bande thermoplastique 10 une bande de déchets 10A.

De manière connue en soi, le poste de thermoformage 20 comprend une pluralité d'ensembles de thermoformage comprenant chacun une chambre de thermoformage 21, formée dans un bloc de moule 22, et un piston 28 mobile en va-et-vient dans une chemise de piston 26 formée dans un contre-moule 23. En l'espèce, on voit que les chambres de thermoformage 21 permettent de réaliser des récipients ayant des contre-dépouilles.

Le dispositif comprend également des moyens 30, non représenté en détails, pour saisir les récipients thermoformés dans le poste de thermoformage 20 et transférer ces récipients dans un poste de remplissage 32, dans lequel le produit que ces récipients sont destinés à contenir (en particulier un produit alimentaire de type pâteux ou liquide) est dosé dans ces récipients. En aval du poste de remplissage 32, le dispositif comprend un poste de fermeture 34, dans lequel des opercules 36 sont disposées sur les ouvertures des récipients 29 et scellées en travers de ces ouvertures.

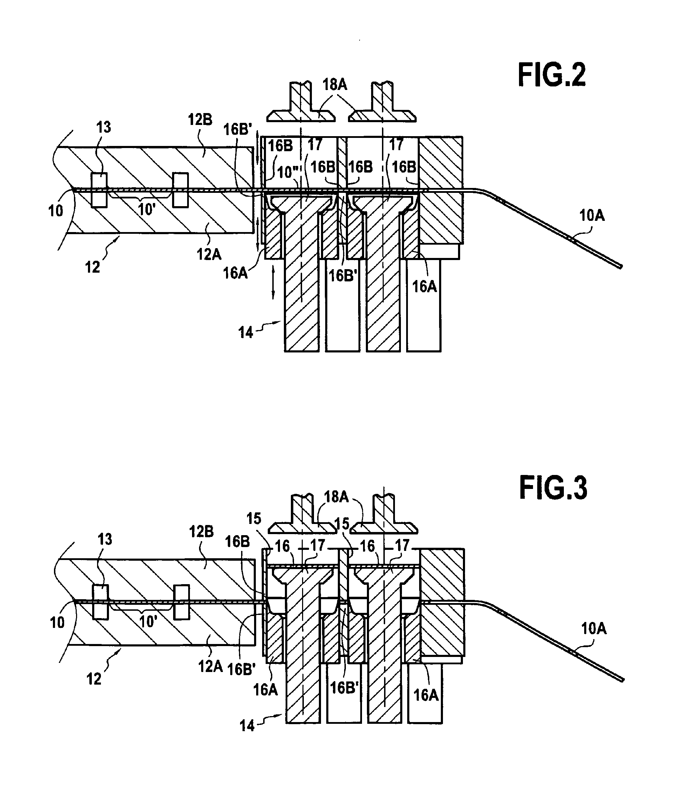

En référence aux figures 2 à 5, on décrit maintenant plus en détails la conformation du poste de découpe et celle des moyens de transfert des pastilles découpées. On reconnaît sur ses figures, la boîte de chauffe du poste de chauffe 12, qui comprend, de manière classique, deux parties respectivement 12A et 12B situées de part et d'autre de la bande et aptes à être rapprochées l'une de l'autre pour être respectivement plaquées contre les faces inférieure et supérieure de la bande. Les faces actives de ces deux parties, respectivement la face supérieure de la partie inférieure 12A et la face inférieure de la partie supérieure 12B, présentent les zones de dégagement 13 dans lesquelles lesdites faces actives ne sont pas en contact avec la bande thermoplastique 10. Ainsi, la bande n'est portée à température de déformation thermoplastique qu'entre ces zones de dégagement 13. Avantageusement, lesdites zones de dégagement 13 sont organisées de manière à former des alvéoles annulaires entre lesquelles sont délimitées des zones de pastilles 10' qui sont les zones chauffées dans le poste de chauffe 12.

Le poste de découpe 14 situé en aval du poste de chauffe 12 comprend une pluralité d'ensembles de découpe servant, chacun, à découper une pastille dans une zone chauffée 10' de la bande de matériau thermoplastique 10. On comprend que chaque ensemble de découpe comprend un outil de découpe qui comprend un couteau ou poinçon annulaire 16A, et un contre-outil de découpe 16B. Les outils et contre-outil sont situés de part et d'autre de la bande de matériau thermoplastique. En l'espèce, le contre-outil 16B coopère également avec un outil opposé 16B', situé de l'autre côté de la bande pour pincer la bande entre eux et favoriser la découpe par un déplacement des couteaux annulaires perpendiculairement au plan de la bande. En l'espèce, les couteaux annulaires sont situés sous la bande de sorte que c'est leur déplacement vers le haut qui provoque la découpe.

On voit également sur les figures 2 à 5 que l'ensemble de découpe comprend, pour chaque pastille, un noyau de support de pastille 17 qui est situé à l'intérieur du couteau annulaire 16A et qui est apte à porter une pastille découpée 16. Ce noyau de support de pastille 17 est déplaçable perpendiculairement par rapport au plan de la bande, en va-et-vient pour extraire les pastilles découpées. Pour transférer une pastille découpée depuis le poste de découpe 14 vers le poste de thermoformage 20, le dispositif comprend des moyens de transfert ayant un organe de préhension 18A qui est apte à saisir une pastille découpée dans le poste de découpe et à être déplacé pour extraire cette pastille de ce poste de découpe et l'amener dans le poste de thermoformage.

Les figures 2 à 5 permettent de bien comprendre les séquences de déplacement des moyens de découpe et des moyens de transfert.

Sur la figure 2, une portion non découpée de la bande vient d'être amenée dans le poste de découpe 16, et les zones chauffées 10' sont situées dans l'encombrement annulaire des couteaux 16A. Une zone de déchets 10A de la bande vient quant à elle de sortir du poste de découpe 16 par avancement de cette bande. Pour permettre l'avancement de la bande, les contre-outils de découpe 16B et les outils opposés 16B' ont été légèrement écartés les uns des autres.

Sur la figure 2, ces contre-outils et outils opposés sont revenus les uns vers les autres de manière à pincer entre eux la bande 10 et l'on voit que les couteaux 16A sont encore très légèrement en retrait par rapport à la face inférieure de la bande. Quant à eux, les organes de préhension 18A sont dégagés vers le haut par rapport aux contre-outils de découpe 16B. Les noyaux de support de pastilles 17 sont en léger retrait vers le bas à l'intérieur des couteaux 16A, position de repos qu'ils adoptent pour dégager l'avancement de la bande dans le poste de découpe.

Sur la figure 3, des pastilles 16 viennent d'être découpées dans la bande de matériau thermoplastique, on voit que les couteaux annulaires 16A sont en position haute, leurs arêtes de découpe ayant tout juste dépassé le plan de la bande de matériau thermoplastique 10. Immédiatement après cette découpe, les noyaux de support de pastille 17 ont été déplacés vers le haut et l'on voit qu'ils portent les pastilles découpées 16 dans les chemises cylindriques 15 formées à l'intérieur des contre-outils de découpe 16B. Dans cette situation, les organes de préhension 18A sont toujours dégagés vers le haut par rapport aux contre-outils de découpe 16B.

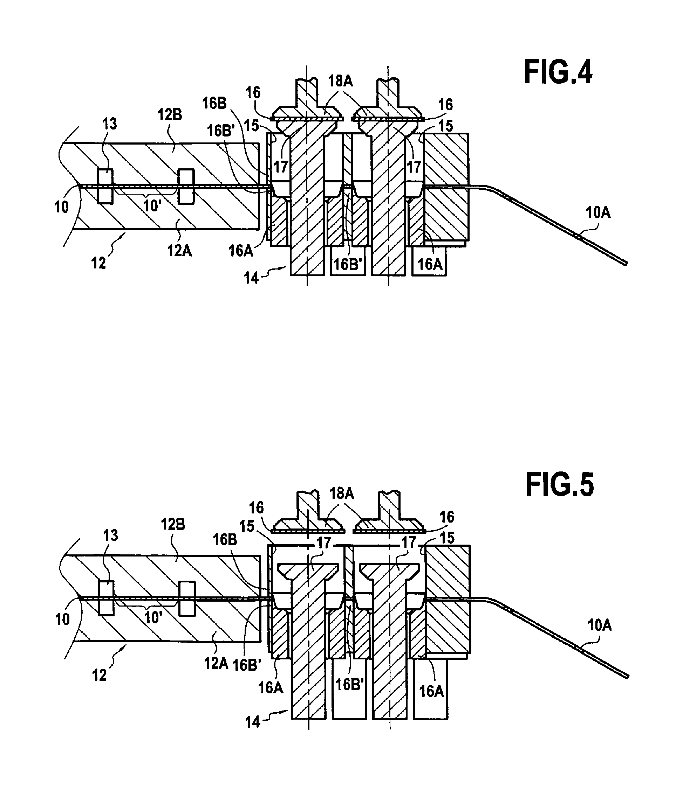

Sur la figure 4, les noyaux de support de pastille 17 ont été encore davantage déplacés vers le haut de manière à sortir des chemises 15 pour amener les pastilles 16 jusqu'au contact des organes de préhension 18A.

Sur la figure 5, les organes de préhension 18A ont saisi les pastilles 16 qui ont été amenées jusqu'à eux, alors que les noyaux de support de pastille sont en phase de descente dans les chemises 15 pour revenir jusqu'à leurs positions représentées à la figure 2. Dans le même temps, les couteaux annulaires 16A descendent également pour dégager l'avancement de la bande de matériau thermoplastique 10, et les contre-outils de découpe 16B et les outils opposés 16B' s'écartent légèrement les un des autres pour permettre l'avancement de la bande.

On comprend que, dans l'exemple représenté, les organes de préhension restent en position verticale fixe dans le poste de découpe puisque c'est uniquement par un mouvement vers le haut des noyaux de support de pastilles que les pastilles sont amenées jusqu'à ces organes de préhension. Toutefois, on pourrait également concevoir une situation inverse, dans laquelle les noyaux de support de pastilles 17 resteraient pratiquement fixes en position verticale, tandis que chaque organe de préhension 18A descendrait dans une chemise 15 pour venir y saisir une pastille qui vient d'être découpée.

De préférence, au moins l'un des éléments constitués par le noyau de support de support de pastille 17 et par le couteau 16A est chauffé, pour éviter de refroidir les pastilles lors de leur découpe. Il est également préférable que les organes de préhension 18A soient chauffés, pour éviter de refroidir les pastilles lors de leur transfert depuis le poste de découpe jusqu'au poste de thermoformage.

Il est avantageux que l'organe de préhension 18A soit une ventouse fonctionnant par aspiration d'air. Cette ventouse peut avoir la forme d'un disque plat, pourvu sur sa périphérie annulaire d'un joint, par exemple un joint en silicone résistant à des températures élevées. Il suffit d'opérer une légère aspiration d'air dans la face inférieure de l'organe de préhension délimitée à l'intérieur du joint précité pour que les pastilles restent plaquées contre cette face inférieure.

On comprend que les moyens de transfert comprennent autant d'organes de préhension 18A que le poste de découpe 14 comprend d'ensemble de découpes, chaque organe de préhension étant associé à un ensemble de découpe. Dans l'exemple représenté, en coupe verticale prise parallèlement à la direction allant de l'amont vers l'aval du dispositif, on a illustré deux ensembles de découpe et deux organes de préhension, montrant donc la découpe et le transfert de deux pastilles. En effet, avantageusement, les moyens précités sont organisés par groupes de deux, les groupes étant disposés les uns à la suite des autres en direction transversale au sens d'avancement de la bande.

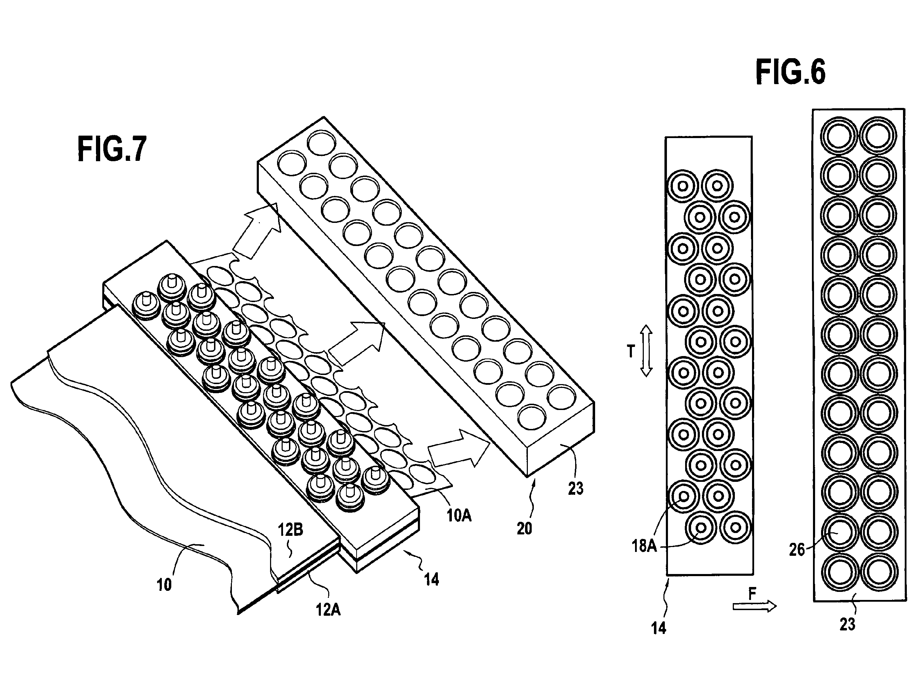

On comprend bien cette organisation se référant à la figure 6, sur laquelle le sens d'avancement de la bande est indiqué par la flèche F. Cette figure montre, en partie gauche, le poste de découpe 14 et, sur cette vue schématique prise de dessus, on voit la disposition des différents organes de préhension 18A. Pour minimiser les déchets dans la bande, on comprend que les pastilles sont découpées les plus proches possibles les unes des autres. En d'autres termes, les différents ensembles de découpe servant chacun à la découpe simultanée d'une pastille sont disposés le plus près possible les uns des autres. On comprend en se référant à la partie gauche de la figure 6, que les groupes successifs d'ensemble des coupes disposés les uns à la suite des autres dans la direction transversale T sont organisés en quinconce.

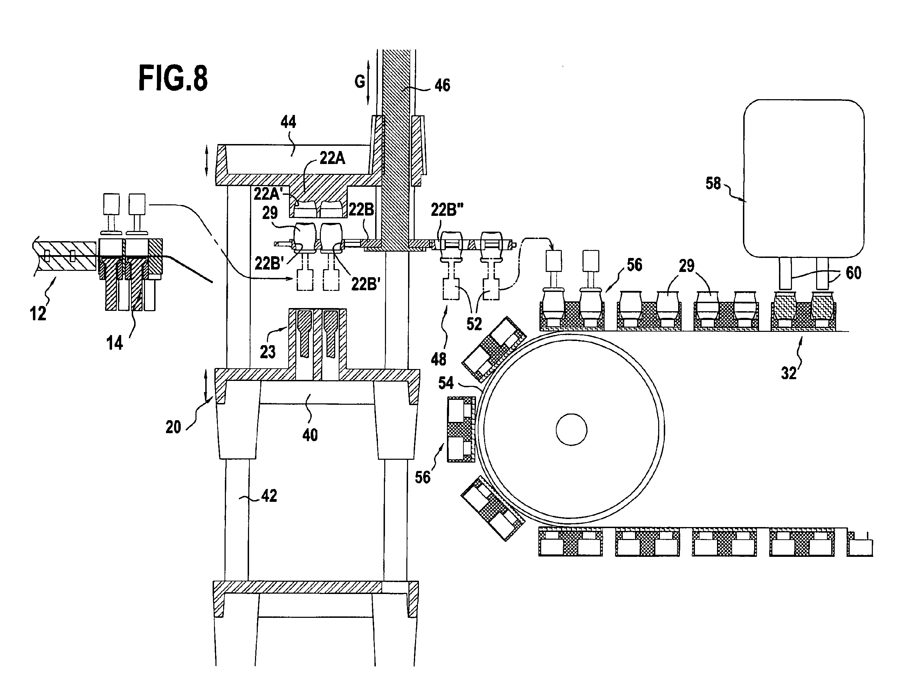

La partie droite de la figure 6 montre quant à elle l'organisation des chambres de thermoformage. Dans l'exemple représenté sur la figure 1, et ainsi qu'il sera également décrit en référence à la figure 8, les récipients sont thermoformés vers le haut, c'est-à-dire que le bloc de moule 22 est disposé au-dessus du contre-moule 23. La figure 6 est prise dans un plan horizontal situé entre le moule et le contre-moule et en vue de dessus, de sorte que la partie droite de cette figure montre la face supérieure du contre-moule 23, avec les chemises 26 dans lesquelles se déplacent les pistons de thermoformage. Bien évidemment, la disposition de ces chemises 26 correspond à celle des chambres de thermoformage 21 en alignement vertical. En d'autres termes, pour un thermoformage réalisé vers le bas, on peut considérer que l'organisation entre la partie droite de la figure 6 est également celle des chambres de thermoformage.

On voit que les chambres de thermoformage sont organisées en deux rangées transversales à la direction F, et sont nettement plus espacées les unes des autres que les ensembles de découpe. Ainsi, les organes de préhension 18A sont réalisés individuellement, c'est-à-dire un organe par pastille, et sont déplaçables les uns par rapport aux autres pour pouvoir être rapprochés les uns des autres de manière à saisir les pastilles dans le poste de découpe 14 et à être écartés les uns des autres pour disposer les pastilles dans les ensembles de thermoformage.

Les organisations respectives des ensembles de découpe et des ensembles de thermoformage sont également indiquées sur la vue en perspective de la figure 7, les flèches montrant le déplacement des organes de préhension permettant d'espacer les pastilles les unes des autres lors de leur transfert entre le poste de découpe 14 et le poste de thermoformage 20.

En se référant maintenant à la figure 8, on décrit l'organisation du poste de thermoformage 20. Sur cette figure, on voit la partie aval du poste de chauffe avec la boîte de chauffe 12, le poste de découpe 14, le poste de thermoformage 20 et le poste de remplissage 32. Le contre-moule 23 est disposé sur une platine inférieure 40 du poste de thermoformage 20, cette platine étant mobile verticalement en va-et-vient en étant guidée sur des tiges 42. Le bloc de moule comprend quant à lui une base de bloc de moule 22A qui est portée par une platine supérieure 44, également mobile verticalement en va-et-vient en étant guidée par les tiges 42.

Cette base de bloc de moule présente des cavités de thermoformage 22A', également illustrées sur la figure 1.

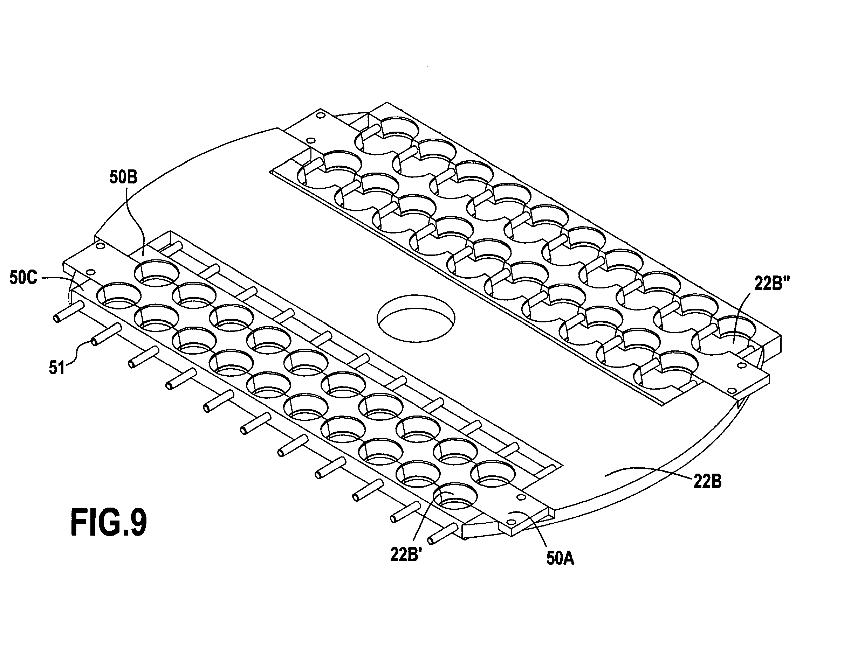

Le bloc de moule comprend également une interface de bloc de moule 22B qui, comme on le voit mieux sur la figure 9, comprend au moins deux séries de chemises d'interface, respectivement 22B' et 22B". Les chemises d'interface de chacune des deux séries peuvent alternativement être disposées en regard avec les cavités de thermoformage 22A' pour former avec elles les chambres de thermoformage 21 (dans la situation représentée, ce sont les chemises d'interface de la première série 22B' qui sont disposées en regard des cavités 22A'), et être écartées de la base de bloc de moule 22A pour permettre le dégagement de récipients préalablement thermoformés. Sur la figure 8, les chemises d'interface de la première série 22B' sont disposées en regard des cavités de thermoformage 22A' mais, par déplacement vers le bas de l'interface de bloc de moule 22B, elles ont été écartées verticalement de ces cavités 22A' pour entraîner avec elles des récipients 29 qui viennent d'être thermoformés et les démouler ainsi par rapport aux cavités 22A'. A partir de cette position basse, l'interface de bloc de moule 22B peut être pivotée dans un plan horizontal par une rotation de sa tige de support de pivotement 46 et amener ainsi les chemises de la série 22B', qui portent des récipients 29B, à la place des chemises de la deuxième série 22B".

En l'espèce, l'interface de bloc de moule comprend deux séries de chemises d'interface symétriques par rapport à un axe transversal passant par son axe de rotation, et donc espacées angulairement de 180°. On pourrait avoir deux, trois ou quatre séries de chemises, de préférence disposées selon un écart angulaire régulier.

En se référant à la figure 9, on comprend que les chemises d'interface peuvent adopter une configuration resserrée pour le thermoformage et une configuration dilatée pour le dégagement des récipients. En effet, sur cette figure, les chemises d'interface 22B' de la première série sont en configuration resserrée qui sert non seulement pour le thermoformage, mais également pour le démoulage des récipients 29 par rapport aux cavités de thermoformage 22A' et pour le maintien de ces récipients dans ces chemises 22B' lors du déplacement de l'interface de bloc de moule 22B pour amener lesdites chemises 22B' en regard de moyens de transfert 48 (voir figure 8) permettant de transférer le récipient vers le poste de remplissage 32.

Sur la figure 9, les chemises d'interface 22B" sont en configuration dilatée ce qui permet, à l'aide des moyens de transfert 48 précités, de dégager les récipients de ces chemises. En l'espèce, les chemises d'interface sont formées en deux parties délimitant chacune la moitié de leur pourtour et déplaçables l'une par rapport à l'autre.

En l'espèce, les chemises d'interface de chaque série étant organisées en deux rangées, l'interface de bloc de moule 22B comprend une barrette centrale 50A qui est fixe par rapport à ladite interface et qui délimite, sur ses deux côtés opposés, la moitié du pourtour des chemises de chacune des deux rangées. De part et d'autre de cette barrette centrale, l'interface de bloc de moule comprend, pour chaque série, une barrette latérale, respectivement 50B et 50C. Ces barrettes latérales 50B et 50C peuvent être déplacées par rapport à la barrette centrale par translation dans le plan de l'interface de bloc de moule en étant guidées par des guides 51.

En se reportant à la figure 8, on décrit maintenant le transfert des récipients depuis l'interface de bloc de moule jusqu'au poste de remplissage. Comme on l'a indiqué précédemment, le dispositif comprend des moyens de transfert 48 ayant des organes de préhension 52 (1 par récipient 29) permettant de saisir chaque récipient lors de son dégagement par rapport à une chemise d'interface. Les moyens de transfert comprennent également un convoyeur 54 ayant des blocs de support 56 dans lesquels les récipients peuvent être posés selon deux rangées transversales. Par exemple, les organes de préhension 52 comprennent des ventouses qui pénètrent dans les récipients et les maintiennent contre elles par leurs fonds. En l'espèce, les récipients étant thermoformés vers le haut, les ventouses sont agencées sur des moyens pivotants pour retourner ces récipients, et sur des moyens mobiles en translation pour venir se placer en regard d'un bloc de support 56 et déposer sur ce dernier les récipients retournés.

Avantageusement, les blocs de support 56 présentent des alvéoles dans lesquelles les récipients peuvent être disposés pour être maintenus. Les blocs de support 56 sont acheminés sur le convoyeur 54 jusqu'au poste de remplissage 32. Ce poste comprend un réservoir 58 de produit de remplissage (en particulier un produit alimentaire pâteux ou liquide) et des buses de remplissage 60.

La bande matériau thermoplastique à partir de laquelle sont découpées les pastilles est en matériau thermoplastique tel que du polystyrène ou, avantageusement, du polypropylène. Elle présente par exemple une épaisseur de l'ordre de 2 à 3 mm, en particulier de l'ordre de 2,2 mm.

## Revendications

1. Dispositif de fabrication de récipients par thermoformage, comprenant un poste de thermoformage (20) qui comprend une pluralité de chambres de thermoformage (21),
**caractérisé en ce que** le poste de thermoformage (20) comprend une base de bloc de moule (22A) présentant des cavités de thermoformage (22A') et une interface de bloc de moule (22B) comprenant au moins deux séries de chemises d'interface (22B', 22B"), l'interface de bloc de moule (22B) étant apte à être déplacée de telle sorte que les chemises d'interface (22B') d'une série puissent être placées en regard des cavités de thermoformage (22A') de la base de bloc de moule (22A) de manière à former, avec ces cavités, des chambres de thermoformage (21) dans lesquelles des récipients (29) peuvent être thermoformés, tandis que les chemises d'interface (22B") de l'autre série sont écartées de la base de bloc de moule (22A) pour permettre le dégagement de récipients (29) préalablement thermoformés, portés par ces chemises d'interface (22B").

2. Dispositif selon la revendication 1, **caractérisé en ce que** les chemises d'interface (22B', 22B") peuvent adopter une configuration resserrée pour le thermoformage et une configuration dilatée pour le dégagement des récipients (29).

3. Dispositif selon la revendication 2, **caractérisé en ce que** les chemises d'interface (22B', 22B") de chaque série sont organisées en deux rangées et l'interface de bloc de moule (22B) comprend une barrette centrale (50A) qui est fixe par rapport à ladite interface et qui délimite, sur ses deux côtés opposés, une partie du pourtour des chemises de chacune des deux rangées, et deux barrettes latérales (50B, 50C) qui sont situées de part et d'autre de la barrette centrale (50A) et délimitent respectivement une autre partie du pourtour des chemises de chacune des deux rangées.

## Patentansprüche

1. Vorrichtung zur Herstellung von Behältern durch Thermoformen, umfassend eine Thermoformstation (20), die eine Vielzahl von Thermoformkammern (21) umfasst,
**dadurch gekennzeichnet, dass** die Thermoformstation (20) eine Formblockbasis (22A), die Thermoformhohlräume (22A') aufweist, und eine Formblockschnittstelle (22B) mit wenigstens zwei Reihen von Schnittstellenbuchsen (22B', 22B") umfasst, wobei die Formblockschnittstelle (22B) geeignet ist, derart bewegt zu werden, dass die Schnittstellenbuchsen (22B') einer Reihe gegenüber den Thermoformhohlräumen (22A') der Formblockbasis (22A) angeordnet werden können, um mit diesen Hohlräumen Thermoformkammern (21) zu bilden, in denen Behälter (29) thermogeformt werden können, während die Schnittstellenbuchsen (22B") der anderen Reihe von der Formblockbasis (22A) entfernt sind, um das Freigeben von zuvor thermogeformten, durch diese Schnittstellenbuchsen (22B") getragenen Behältern (29) zu ermöglichen.

2. Vorrichtung nach Anspruch 1, **dadurch gekennzeichnet, dass** die Schnittstellenbuchsen (22B', 22B") eine enger gestaltete Form für das Thermoformen und eine erweiterte Form für das Freigeben der Behälter (29) annehmen können.

3. Vorrichtung nach Anspruch 2, **dadurch gekennzeichnet, dass** die Schnittstellenbuchsen (22B', 22B") einer jeden Reihe in zwei Reihen angeordnet sind und die Formblockschnittstelle (22B) eine mittlere Leiste (50A), die gegenüber der Schnittstelle fest ist und die an ihren beiden entgegengesetzten Seiten einen Teil des Umfangs der Buchsen einer jeden der beiden Reihen begrenzt, sowie zwei seitliche Leisten (50B, 50C) umfasst, die auf beiden Seiten der mittleren Leiste (50A) gelegen sind und jeweils einen weiteren Teil des Umfangs der Buchsen einer jeden der beiden Reihen begrenzen.

## Claims

1. A device for manufacturing containers by thermoforming, comprising a thermoforming station (20) which comprises a plurality of thermoforming chambers (21), **characterized in that** the thermoforming station (20) comprises a mould block base (22A) having thermoforming cavities (22A') and a mould block interface (22B) comprising at least two series of interface jackets (22B', 22B"), the mould block interface (22B) being able to be moved so that the interface jackets (22B') of one series are able to be placed facing thermoforming cavities (22A') of the mould block base (22A) so as to form, with these cavities, thermoforming chambers (21) in which containers (29) can be thermoformed, whilst the interface jackets (22B") of the other series are drawn away from the mould block base (22A) to allow the disengaging of containers (29) previously thermoformed carried by these interface jackets (22B").

2. The device according to claim 1, **characterized in that** the interface jackets (22B', 22B") can assume a tight configuration for thermoforming and an expanded configuration for disengaging the containers (29).

3. The device according to claim 2, **characterized in that** the interface jackets (22B', 22B") of each series are arranged in two rows and the mould block interface (22B) comprises a central bar (50A), which is fixed with respect to said interface and delimits, on its two opposite sides, a portion of the outline of the jackets of each of the two rows, and two side bars (50B, 50C) which are located the respective sides of the central bar (50A) and respectively delimit another portion of the outline of the jackets of each of the two rows.
